(19) Europäisches Patentamt
European Patent Office
Office européen des brevets

(11) Publication number: 0 025 237 B1

(12) EUROPEAN PATENT SPECIFICATION

(45) Date of publication of patent specification: 16.02.83

(51) Int. Cl.$^3$: C 01 F 11/38

(21) Application number: 80200738.5

(22) Date of filing: 04.08.80

# (54) Method for producing strontium nitrate.

(30) Priority: 13.08.79 US 66117

(43) Date of publication of application:
18.03.81 Bulletin 81/11

(45) Publication of the grant of the patent:
16.02.83 Bulletin 83/7

(84) Designated Contracting States:
BE DE FR GB IT NL

(56) References cited:
US - A - 3 010 788
CHEMICAL & METALLURGICAL ENGINEERING January 1946 "Strontium Chemicals" pages 152 to 155.

Chemical Abstracts vol. 85, November 1976 Columbus, Ohio, USA. D.L. STEIN "Extraction of strontium values from celestite concentrate at the Kaiser plant in Nova Scotia" page 214, column 2, abstract no. 146349x.

GMELINS HANDBUCH DER ANORGANISCHEN CHEMIE, 8th edition 1960, VERLAG CHEMIE, Weinheim supplementary volume "Strontium" pages 174, 184 to 185.

(73) Proprietor: FMC Corporation
2000 Market Street
Philadelphia Pennsylvania 19103 (US)

(72) Inventor: Sansone, Michael John
17 James Street
Shoreham New York 11786 (US)
Inventor: Manganaro, James Lawrence
3 Buxton Drive
East Windsor New Jersey 08520 (US)

(74) Representative: Plucker, Guy et al,
OFFICE KIRKPATRICK 4 Square de Meeûs
B-1040 Bruxelles (BE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

EP 0 025 237 B1

# Method for producing strontium nitrate

This invention relates to the production of strontium chemicals. More particularly, the invention is concerned with a process of manufacturing strontium nitrate from strontium sulfate.

Strontium nitrate is an industrial chemical whose principal use is for producing red fire in pyrotechnics such as railroad fuses, emergency flares, signal rockets and fireworks. It is a white crystalline compound existing in two forms: the anhydrous $Sr(NO_3)_2$ and the tetrahydrate $Sr(NO_3)_2{\cdot}4H_2O$). The anhydrous is the form which is normally manufactured for commercial purposes.

Strontium compounds including the nitrate are normally derived from celestite ($SrSO_4$), a naturally occurring strontium sulfate and the most abundant of strontium ores. The first step leading toward strontium nitrate is the conversion of the strontium sulfate to the carbonate, the key intermediate from which all other strontium salts are prepared.

There are two commercial processes for converting celestite to the versatile carbonate derivative; the black ash method and the metathesis method. In the black ash method, celestite ore is reduced in a rotary kiln to strontium sulfide and carbon dioxide by the following reaction:

$$SrSO_4 + 4CO \rightarrow SrS + 4CO_2$$

The black ash is then leached and the resulting strontium sulfide solution treated with a soluble carbonate to precipitate the strontium carbonate by the following reaction:

$$SrS + Na_2CO_3 \rightarrow SrCO_3 + Na_2S$$

The insoluble precipitate is separated and washed while the aqueous solution is evaporated to give a technical grade of sodium sulfide. In the metathesis method, a slurry of celestite ore is heated in a solution of an alkali metal carbonate whereby the following metathetical reaction occurs:

$$SrSO_4 + Na_2CO_3 \rightarrow Na_2SO_4 + SrCO_3$$

The precipitated strontium carbonate is separated from the sodium sulfate solution, washed and dried; sodium sulfate is recovered as a by-product.

As to the relative merits of the two processes, the black ash method has the advantage of providing an inherently high quality product requiring little or no additional purification. Thus, essentially a pure strontium sulfide solution is obtained on leaching the reaction mass and this solution on treatment with sodium carbonate gives high purity strontium carbonate. However, the black ash method is capital intensive requiring considerable investment in high temperature rotary kilns.

The metathesis method, on the other hand, can be carried in low cost equipment since the reaction occurs at relatively low temperature. Typically, it can.be performed by boiling a slurry of celestite in aqueous sodium carbonate. The drawback with the metathesis method is that the strontium carbonate is contaminated with other alkaline earth carbonates, notably barium, calcium, and magnesium. These usually occur in celestite ore and must be removed or reduced to a sufficiently low level whereby they do not interfere or dilute the scarlet red flame coloration of strontium nitrate prepared from the strontium carbonate. The removal of calcium and barium impurities calls for treating the crude strontium carbonate with aqueous washes in large purification vessels to extract the barium and calcium salts after which the washed precipitate is filtered and dried. For a more detailed discussion on the commercial production of the strontium carbonate by the metathesis method, reference is made to "Strontium Chemicals" in Chemical and Metallurgical Engineering, January 1946 (pages 152 to 155).

In accordance with the present invention, there is provided a method of producing purified strontium nitrate, suitable for use in pyrotechnics, from strontium sulfate (celestite) which comprises:

(a) converting the strontium sulfate to strontium carbonate by heating a suspension of the strontium sulfate in a solution of an alkali metal carbonate whereby there is formed a precipitate of crude strontium carbonate and a solution of an alkali metal sulfate; washing the precipitate with water to substantially remove the alkali metal sulfate and give a washed precipitate of crude strontium carbonate;

(b) forming a strontium nitrate solution by adding nitric acid to an aqueous suspension of the washed precipitate from step (a) whereby carbonate is converted to nitrate;

(c) treating the strontium nitrate solution from (b) with an alkaline metal hydroxide whereby heavy metals and a substantial amount to an essentially total amount of magnesium are precipitated as hydroxides.

(d) producing a clarified strontium nitrate solution by separating any insoluble material from the solution of step (c);

(e) subjecting the clarified strontium nitrate solution of step (d) to evaporate crystallization to selectively form strontium nitrate crystals;

(f) separating the strontium nitrate crystals in step (e) to give isolated strontium nitrate crystals and mother liquor; and optionally

(g) returning the mother liquor in step (f) to the evaporative crystallization stage in step (e), while sufficiently purging the mother liquor with a purge stream to prevent impurities therein from reaching a level at which they co-crystallize with the strontium nitrate;

(h) washing the isolated strontium nitrate crystals in step (f) to remove adhering mother liquor and give purified strontium nitrate crystals and wash water.

The primary advantage of the invention is that it provides an integrated method of producing strontium nitrate from celestite by way of strontium carbonate based on the metathetical reaction of celestite with an alkali metal carbonate without removing other alkaline earth carbonates from the intermediate strontium carbonate prior to converting it to strontium nitrate.

In carrying out the herein process, strontium sulfate is converted to strontium carbonate by the known metathesis method of reacting strontium sulfate with an alkali metal carbonate. The source of the strontium sulfate is finely milled celestite ore which is slurried with an aqueous solution of the alkali metal carbonate. The alkali metal carbonate is desirably sodium carbonate although other members of the series are satisfactory, such as potassium carbonate and sodium sesquicarbonate or trona. Preferred and extended operating conditions for conducting the metathesis reaction are summarized below.

| | Preferred Range | Extended Range |
|---|---|---|
| Pressure, atm. | 0.8—1.2 | 0.6—10 |
| Temperature, °C | 93—105 | 85—181 |
| % Ore to Total Slurry Weight | 20—25 | 5—40 |
| Excess Soda Ash, % | 2—4 | 0—30 |
| Ore particle size, micron | 10—30 | 1—150 |
| Residence time, hr. | 0.75—1.5 | 0.3—6 |

Fine grinds of celestite ore promote faster reaction times but excessively fine powder may result in a strontium carbonate precipitate which is difficult to separate and free of entrained liquor.

After the metathesis is complete, the precipitated strontium carbonate is separated from the reaction mixture and washed to remove adhering sodium sulfate solution. Sufficient washing is required to reduce the sodium content to about 0.7 to 1.0% (dry weight basis). About 6 to 10 displacement washes or equivalent thereof will bring the sodium assay within the prescribed range. The sodium content must be controlled to minimize yellow contamination of the red flame of the pyrotechnic material. Separation is effected by such well known procedures as filtration or centrifugation using equipment available from commercial manufacturers; either a belt filter or solid bowl centrifuge is satisfactory. A rotary filter has a tendency to pick up only fine particles and is thus not recommended unless the grind should contain considerable amounts of material below 10 micrometres. The washed damp cake of crude strontium carbonate has a water content which normally varies from 15% to 43%, preferably 20—25%. The composition of the crude material (dry weight basis) will vary, depending on the assay of the celestite ore. A representative strontium carbonate damp cake analysis on a substantially dry weight basis runs as follows:

| | |
|---|---|
| 86% | $SrCO_3$ |
| 8% | $CaCO_3$ |
| 2% | $MgCO_3$ |
| 2% | $Na_2SO_4$ |
| 1.5% | Inerts |
| 1% | $BaCO_3$ |

| | |
|---|---|
| 0.5% | $BaSO_4$ |
| 0.1% | $Na_2CO_3$ |

The crude strontium carbonate wet cake is placed in a vessel of water and the mixture thoroughly agitated. To the resulting suspension was added concentrated (69%) nitric acid thereby forming strontium nitrate. Since the damp cake contains alkaline earth and alkali metal carbonates, the nitrates of these metals will be formed along with the strontium nitrate. The principal reactions can be depicted by the following equations:

$$SrCO_3 + 2HNO_3 \rightarrow Sr(NO_3)_2 + H_2O + CO_2$$

$$BaCO_3 + 2HNO_3 \rightarrow Ba(NO_3)_2 + H_2O + CO_2$$

$$MgCo_3 + 2HNO_3 \rightarrow Mg(NO_3)_2 + H_2O + CO_2$$

$$CaCO_3 + 2HNO_3 \rightarrow Ca(NO_3)_2 + H_2O + CO_2$$

$$Na_2CO_3 + 2HNO_3 \rightarrow 2NaNO_3 + H_2O + CO_2$$

Treatment of the strontium carbonate suspension with nitric acid is desirably effected at mildly elevated temperatures such as from 40°C to 90°C. Sufficient nitric acid is used to insure conversion of the carbonates into nitrates. A convenient procedure is to continue adding the nitric acid until evolution of carbon dioxide has ceased at which point the reaction is essentially complete. Any excess acidity is neutralized by treatment with a further quantity of strontium carbonate wet cake to bring the pH to 3 to 4.

Calcium hydroxide is next added to increase the pH to 7 to 8 thereby precipitating the hydroxides of any heavy metals which are present in the nitrate solution; considerable magnesium hydroxide is also precipitated, normally 25 to 75%, typically 50%. The amount of water in which the strontium carbonate wet cake is suspended can vary over wide limits since the reaction with nitric acid proceeds satisfactorily whether the suspension is dilute or concentrated. Sufficient water should, of course, be present to insure dissolution of the metal nitrates. The concentration of the wet cake slurry is adjusted to give a solids content (dry basis) of from 0.5% to 6%, preferably 1% to 3%.

The crude strontium nitrate solution is freed of any insoluble matter. This is effected, for example, by adding diatomaceous earth or similar filter-aid material to the solution and passing it through a pressure leaf filter. The temperature during filtration is held to the range of 40°C to 100°C, preferably 60°C to 80°C; filter-aid amounts to 0.1 to 0.5% (by weight of slurry) preferably 0.1 to 0.2%; displacement washes amount to 0—5, preferably 2 to 3.

The resulting clarified strontium nitrate solution generally falls within the following assay, with variations amounting to ± 10% by weight:

| | |
|---|---|
| 39% | $Sr(NO_3)_2$ |
| 6% | $Ca(NO_3)_2$ |
| 1% | $NaNO_3$ |
| 1% | $Mg(NO_3)_2$ |
| 0.4% | $Ba(NO_3)_2$ |
| rem. | water |

The clarified strontium nitrate solution is subjected to evaporative crystallization at temperatures between 60—90°C, preferably between 65—75°C to give solid strontium nitrate crystals. These are separated, washed to remove adhering mother liquor and dried.

The resulting material is a high quality pyrotechnical grade of crystalline anhydrous strontium nitrate. A representative product typically assays as follows:

| | |
|---|---|
| 98.0% | $Sr(NO_3)_2$ |
| 1.0% | $Ba(NO_3)_2$ |
| 0.35% | $Ca(NO_3)_2$ |

| | |
|---|---|
| 350 ppm | $NaNO_3$ |
| 550 ppm | $Mg(NO_3)_2$ (ppm = parts per million) |

That pyrotechnical quality strontium nitrate can be crystallized from strontium nitrate solution produced directly from impure strontium carbonate wet cake is surprising. A more likely expectation is that the strontium nitrate produced in this manner would be contaminated with other alkaline earth metal nitrates present in the crystallizer solution and, thus have inferior pyrotechnical properties. For instance, sodium and calcium salts in strontium nitrate lighten the scarlet red flame; the green coloration of barium salts distorts it.

The purity of strontium nitrate manufactured in accordance with the herein process is maintained by controlling the compositions of the mother liquor. Generally speaking, satisfactory product quality is realized by controlling impurities in the mother liquor at or below about the following typical mother liquor composition:

| | |
|---|---|
| 37% | $Ca(NO_3)_2$ |
| 8% | $NaNO_3$ |
| 6% | $Sr(NO_3)_2$ |
| 5% | $Mg(NO_3)_2$ |
| Ca 200 ppm | $Ba(NO_3)_2$ |

The process of the invention can be performed as a batch or continuous operation. In either case, however, the mother liquor must be monitored and purged to prevent impurities from building up to levels where they coprecipitate with the strontium nitrate. By holding the composition of the mother liquor at or near the assay aforesaid, strontium nitrate of excellent pyrotechnical quality is obtained.

The rate of purge is conveniently based on the amount of clarified strontium nitrate solution being fed into the crystallizer. A purge of 16% by weight of the input nitrate solution normally suffices to keep the mother liquor in the vicinity of optimum composition provided the sodium in the strontium carbonate wet cake is maintained at the preferred level of 0.7 to 1.0%. The purge rate can also be expressed in terms of Kg/Kg of dry product, in which case the rate is in the range of 0.30 to 0.50, preferably 0.35 to 0.50. Of course, the purge rate will vary depending on the celestite ore assay.

The purge stream is piped into a shallow, lined pond where evaporation reduces the volume of waste solution. However, because nitrate salts are highly hydroscopic, the rate of evaporation is retarded, particularly under humid conditions, and solution volume may present a waste storage and handling problem. This can be greatly alleviated by adding a precipitating agent to the purge stream, prior to conducting it to the pond, whereby the metal nitrates are converted into insoluble compounds which are separated and the substantially solids-free filtrate sent to the pond. Examples of precipitating agents include soluble sulfate such as sulfuric acid which forms highly insoluble strontium and calcium sulfates which are removed by filtration and transferred to a solids disposal site.

Soluble carbonates such as sodium carbonate are also effective precipitation agents forming insoluble strontium, calcium and magnesium carbonates which are separated and disposed of similarly to the insoluble metal sulfates. The aqueous filtrate, being free of hydroscopic solids, has a higher rate of evaporation and accordingly, the volume of purge liquor can be held down to acceptable levels.

Reference is now made to the following non-limiting examples.

Example 1

*Preparation of Strontium Carbonate*

A 1000 cc resin flask fitted with agitator and reflux condenser was charged with

585 g water

195 g celestite ore (—200 mesh)

106 g $Na_2CO_3$ (stoichiometric)

The celestite ore had the following analysis:

| | |
|---|---|
| 88.2% | $SrSO_4$ |
| 1.5% | $BaSO_4$ |

| | |
|---|---|
| 7.6% | $CaCO_3$ |
| 2.4% | $MgCO_3$ |
| 0.1% | $SiO_2$ |
| 0.2% | $R_2O_3$ |

The mixture was heated by refluxing (~100°C) for 3 hours. At the end of this time the slurry was filtered. The crude strontium carbonate wet cake gave the following analysis:

| | |
|---|---|
| 2.1% | $SO_4$ |
| 0.7% | Ba |
| 3.4% | Ca |
| 1.1% | Mg |
| 1.2% | Na |
| 30.9% | $CO_3$ |
| rem. | Essentially Sr |

Example 2

*Preparation of Strontium Carbonate*

A 60 liter vessel fitted with agitator and reflux condenser was charged with the following:

35.6 kg Water

13.3 kg milled celestite (19 microns average particle size)

7.1 kg $Na_2CO_3$

The celestite had the following composition:

| | |
|---|---|
| 88.3% | $SrSO_4$ |
| 1.0% | $BaSO_4$ |
| 1.0% | $CaCO_3$ |
| 2.9% | $MgCO_3$ |
| 1.3% | $SiO_2$ |
| 0.2% | $R_2O_3$ |

The reaction mixture was heated and held at reflux (~100°C) for 2 hours. At the end of this time the slurry was filtered. Analysis of the strontium carbonate wet cake indicated that 95% conversion of the sulfate was achieved.

Example 3

*Preparation of Clarified Strontium Nitrate Solution*

Crude carbonate wet cake (26.8 kg containing 20% water) prepared by metathesis in the manner of the previous examples was suspended in 9 liters of dilution water contained in an agitated vessel. The contents were heated to 65°C and 69% nitric acid added slowly until the evolution of $CO_2$ ceased. A total of 23.1 kg of 69% nitric acid was added.

Strontium carbonate (114 g) was added to bring the pH to 4.6 and was followed by the addition of 230 g of $Ca(OH)_2$ to bring the pH to 7.4. To this slurry was added 0.1% diatomaceous earth filter aid. The slurry was then readily filtered in a pressure leaf filter yielding a filtrate which was clear and gave the following analysis:

| | |
|---|---|
| 38.7% | $Sr(NO_3)_2$ |
| 6.2% | $Ca(NO_3)_2$ |
| 1.2% | $NaNO_3$ |
| 1.1% | $Mg(NO_3)_2$ |
| 0.4% | $Ba(NO_3)_2$ |
| 52.4% | water (by difference) |

The wet cake, containing 26.1% water, was readily discharged from the filter press and handled well. Approximately, 2.1 kg of solids were obtained for every 100 kg of slurry.

Example 4

*Continuous Production of Strontium Nitrate*

A clarified nitrate solution having an average concentration of that prepared in Example 3 was fed continuously to a 1500 cc agitated vessel crystallizer. About 1000 cc of slurry was contained in the vessel. The crystallization was carried out at 70°C and 19.3 k Pa. Product crystals of strontium nitrate were continuously removed and mother liquor returned to maintain a constant solids concentration in the crystallizer. When the concentration of calcium nitrate in the mother liquor reached 35% a portion of the mother liquor was continuously purged at the rate of 0.07 cc purge/cc condensate. Product crystals were water washed at the rate 0.1 kg wash water/kg product strontium nitrate. At the end of this operation in which 61.1 kg of water had been removed during crystallization the washed product crystals had the following analysis:

| | |
|---|---|
| 0.04% | $NaNO_3$ |
| 0.02% | $Mg(NO_3)_2$ |
| 0.4% | $Ca(NO_3)_2$ |
| 0.99% | $Ba(NO_3)_2$ |
| rem. | $Sr(NO_3)_2$ |

The dried crystals were well defined with an average particle size of about 50 mesh and free flowing. Pyrotechnical compositions prepared therefrom produced a brilliant crimson flame.

The mother liquor at this point had the following composition:

| | |
|---|---|
| 8.5% | $NaNO_3$ |
| 1.6% | $Mg(NO_3)_2$ |
| 35.7% | $Ca(NO_3)_2$ |
| 9.2% | $Sr(NO_3)_2$ |
| 247 ppm | $Ba(NO_3)_2$ |

This example demonstrates that pyrotechnical quality can be prepared from crude strontium carbonate wet cake by the process of the present invention.

Example 5

*Preparation of Strontium Carbonate*

This example illustrates that sodium bicarbonate can be used as the alkali metal carbonate in the metathesis reaction.

Sodium bicarbonate (84 g) was slowly added to 566.5 g of water while stirring and heating. Then 91.85 g of $SrSO_4$ was added and the mixture allowed to reflux at 90°C for 2 hours.

A sample was taken and the solids filtered off and repulped twice with water. These solids when suspended in water and treated with concentrated nitric acid went into solution indicating complete conversion to the carbonate.

A 2 cc aliquot of the filtrate required 7.9 cc of 0.0098 N HCl to the phenolphthalein end point,

indicating a residual carbonate concentration of 0.038 M. This data shows that the reaction is essentially complete.

The reaction proceeds according to the following equation.

$$SrSO_4 + 2NaHCO_3 = SrCO_3 + H_2O + CO_2 + Na_2SO_4$$

Example 6

*Preparation of Strontium Carbonate*

This example illustrates that sodium sesquicarbonate ($NaHCO_3 \cdot Na_2CO_3 \cdot 2H_2O$) can be used as the alkali metal carbonate in the metathesis reaction.

To a stirred, heated vessel was added the following:

62 g of milled celestite ore (composition typical of those already given)

566 g of water

113 g of sodium sesquicarbonate

This mixture was allowed to stir and reflux for 3 hours. The solids and filtrate were then obtained and treated in the manner described in Example 5 with results indicating that complete reaction of the sulfate to the carbonate had occurred according to

$$3/2\ SrSO_4 + NaHCO_3 \cdot Na_2CO_3 \cdot 2H_2O =$$

$$3/2\ SrCO_3 + 3/2\ Na_2SO_4 + 1/2\ CO_2 + 5/2\ H_2O$$

Example 7

*Treatment of Mother Liquor Purge Stream*

This example demonstrates how calcium contamination can be removed from crystallizer mother liquor by treatment with sulfuric acid.

A solution approximately simulating crystallizer mother liquor having the following composition by weight:

| | |
|---|---|
| 25.8% | $Ca(NO_3)_2$ |
| 5.9% | $NaNO_3$ |
| 4.4% | $Sr(NO_3)_2$ |
| 3.7% | $Mg(NO_3)_2$ |

was prepared. This solution had a specific gravity of 1.355 g/cc at 27.5°C.

A 100 cc sample of this mother liquor weighing 135.5 g was treated with a stoichiometric amount of 20% $H_2SO_4$ (118.5 g).

Calcium and strontium cations precipitated out as the sulfate which was filtered off. The filtrate had the following analysis (using atomic absorption) by weight:

| | |
|---|---|
| 0.79% | Na |
| 0.33% | Mg |
| 590 ppm | Sr |
| 0.82% | Ca |

This shows how the calcium and other soluble metal salts can be substantially reduced to give a low solids mother liquor. The filtrate of dilute nitric acid can be concentrated and recycled to the nitration stage.

Example 8

This example demonstrates the preparation of commercial quality sodium nitrate from the crystallizer mother liquor purge solution by treatment with sodium carbonate.

A 100 cc sample weighing 135.5 g of simulated crystallizer mother liquor having the composition stated in the previous example was treated with a stoichiometric amount of $Na_2CO_2$ (29 g) to precipitate the carbonates of calcium, strontium and magnesium. The soda ash was added in 5 g increments and the pH after 30 minutes recorded to give the following values:

| $Na_2CO_3$ Added Grams | pH After 30 Min. |
|---|---|
| 0 | 4.3 |
| 5 | 5.7 |
| 10 | 5.8 |
| 15 | 5.8 |
| 20 | 5.9 |
| 25 | 6.3 |
| 30 | 8.1 |

Thus, pH could be used as an indicator of the extent of reaction.

After soda ash addition was complete, the solids were filtered off and the filtrate was evaporated to dryness to yield crystals which X-ray diffraction analysis indicated was virtually pure sodium nitrate. Atomic absorption on the dry solids gave the following analysis:

| | |
|---|---|
| 0.15% | Mg |
| 0.11% | Sr |
| 120 ppm | Ca |

indicating a fairly pure sodium nitrate had been prepared.

These examples demonstrate how magnesium contamination can be removed from crystallizer feed solution by treatment with $Ca(OH)_2$.

Example 9

A solution approximately simulating crystallizer feed having the following composition was prepared:

| | |
|---|---|
| 24.6% | $Sr(NO_2)_2$ |
| 3.1% | $Ca(NO_3)_2$ |
| 0.77% | $NaNO_3$ |
| 1.5% | $Mg(NO_3)_2$ |
| 0.31% | $Ba(NO_3)_2$ |

This solution has an approximate specific gravity of 1.3 g/cc.

Four 200 cc samples each weighing approximately 260 g were treated with varying amounts of $Ca(OH)_2$ powder at 27.5°C. The samples were allowed to stir for 45 minutes after which pH was measured and the resultant slurry was filtered. The filtrate was analyzed for magnesium concentration by atomic absorption. Results are summarized below:

| Amount of $Ca(OH)_2$ Added to each 200 cc aliquot, g | pH at 27.5°C | Mg Conc. | Na Conc. |
|---|---|---|---|
| 0 | 6.2 | 0.24% | — |
| 0.205 | 8.7 | 0.21% | — |
| 0.612 | 8.7 | 0.16% | 0.2% |
| 1.00 | 8.8 | 0.11% | — |
| 3.00 | 11.4 | 0.98 ppm | — |

Example 10

The procedure of Example 9 was repeated at 50°C. Results are summarized in the following table.

| Amount of $Ca(OH)_2$ Added to each 200 cc aliquot, g | pH at 47°C | Mg Conc. | Na Conc. |
|---|---|---|---|
| 0 | 6.3 | 0.22% | 0.19% |
| 0.201 | 8.1 | 0.18% | — |
| 0.601 | 8.2 | 0.16% | 0.2% |
| 1.0 | 8.2 | 0.11% | — |
| 3.0 | 10.7 | 1.55 ppm | — |

**Claims**

1. A method of producing purified strontium nitrate, suitable for use in pyrotechnics, from strontium sulfate (celestite) comprising:

(a) converting strontium sulfate to strontium carbonate by heating a suspension of the strontium sulfate in a solution of an alkali metal carbonate whereby there is formed a precipitate of crude strontium carbonate and a solution of an alkali metal sulfate; washing the precipitate with water to substantially remove the alkali metal sulfate and give a washed precipitate of crude strontium carbonate characterised by:

(b) forming a strontium nitrate solution by adding nitric acid to an aqueous suspension of the washed precipitate from step (a) whereby carbonate is converted to nitrate;

(c) treating the strontium nitrate solution from (b) with an alkaline metal hydroxide whereby heavy metals and a substantial amount to an essentially total amount of magnesium are precipitated as hydroxides;

(d) producing a clarified strontium nitrate solution by separating any insoluble material from the solution of step (c);

(e) subjecting the clarified strontium nitrate solution of step (d) to evaporative crystallization to selectively form strontium nitrate crystals;

(f) separating and water washing the strontium nitrate crystals in step (e) to give isolated strontium nitrate crystals and mother liquor; and optionally

(g) returning the mother liquor in step (f) to the evaporative crystallization stage in step (e), while sufficiently purging the mother liquor with a purge stream to prevent impurities therein from reaching a level at which they co-crystallize with the strontium nitrate;

(h) washing the isolated strontium nitrate crystals in step (f) to remove adhering mother liquor and give purified strontium nitrate crystals and wash water.

2. The process of claim 1 characterized by

(g) returning the mother liquor in step (f) to the evaporative crystallization stage in step (e), while sufficiently purging the mother liquor with a purge stream to prevent impurities therein from reaching a level at which they co-crystallize with the strontium nitrate; and

(h) washing the isolated strontium nitrate crystals in step (f) to remove adhering mother liquor and give purified strontium nitrate crystals and wash water.

3. Method according to claim 1 or 2 characterized in that the alkali metal carbonate in (a) is sodium carbonate.

4. Method according to claim 1 or 2 characterized in that the alkali metal carbonate in (a) is sodium sesquicarbonate.

5. Method according to claim 1 or 2 characterized in that the alkaline metal hydroxide in (c) is calcium hydroxide.

6. Method according to claim 1 or 2 characterized in that the purge is about 16% by weight of the clarified nitrate solution of (d).

7. Method according to claim 1 or 2 characterized in that evaporative crystallization step (e) is carried out continuously.

8. Method according to claim 1 or 2 characterized in that a precipitating agent is added to the purge stream to form insoluble alkaline earth compounds, separating said insoluble alkaline earth compounds and conveying a solids-free purge stream to waste disposal.

9. Method according to claim 8 characterized in that precipitating agent is sulfuric acid which forms insoluble alkaline earth sulfates and a solution of nitric acid.

10. Method according to claim 8 characterized in that the precipitating agent is sodium carbonate which forms insoluble alkaline earth carbonate and a solution of sodium nitrate.

**Patentansprüche**

1. Verfahren zur Herstellung von gereinigtem Strontiumnitrat zur pyrotechnischen Verwendung aus Strontiumsulfat (Celestit), wobei

a) Strontiumsulfat durch Erhitzen einer Suspension von Strontiumsulfat in einer Alkalicarbonatlösung in Strontiumcarbonat unter Bildung eines Niederschlages von Rohstrontiumcarbonat und einer Lösung eines Alkalisulfates umgewandelt wird, der Niederschlag mit Wasser gewaschen wird, um das Alkalisulfat im wesentlichen zu entfernen und einen gewaschenen Niederschlag von Rohstrontiumcarbonat zu erhalten, dadurch gekennzeichnet, daß

b) eine Strontiumnitratlösung durch Zugabe von Salpetersäure zu einer wässrigen Lösung des gewaschenen Niederschlages gemäß Stufe a) unter Umwandlung von Carbonat zu Nitrat gebildet wird;

c) die Strontiumnitratlösung von b) mit einem alkalischen Metallhydroxid behandelt wird, wobei Schwermetalle und ein beträchtlicher Anteil bis zu einem wesentlichen Gesamtanteil Magnesium als Hydroxide ausgefällt werden;

d) eine gereinigte Strontiumnitratlösung durch Trennung irgendeines unlöslichen Materials aus der Lösung von Stufe c) hergestellt wird;

e) die gereinigte Strontiumnitratlösung von Stufe d) einer Verdampfungskristallisation unterworfen wird, um selektiv Strontiumnitratkristalle zu bilden;

f) die Strontiumnitratkristalle der Stufe e) abgetrennt und mit Wasser gewaschen werden, um abgesonderte Strontiumnitratkristalle und eine Mutterlauge zu erhalten; und fakultativ

g) die Mutterlauge in Stufe f) zur Verdampfungskristallisationsphase in Stufe e) zurückgeführt wird, während die Mutterlauge mit einem Reinigungsstrom ausreichend gereinigt wird, um Verunreinigungen darin zu vermeiden, die einen Wert erreichen, bei dem sie mit dem Strontiumnitrat kristallisieren;

h) die isolierten Strontiumnitratkristalle in Stufe f) gewaschen werden, um anhaftende Mutterlauge zu entfernen und gereinigte Strontiumnitratkristalle und Waschwasser zu erhalten.

2. Verfahren nach Anspruch 1, dadurch gekennzeichnet, daß

g) die Mutterlauge in Stufe f) zur Verdampfungskristallisationsphase in Stufe e) zurückgeführt wird, während die Mutterlauge mit einem Reinigungsstrom ausreichend gereinigt wird, um Verunreinigungen darin zu vermeiden, die einen Wert erreichen, bei dem sie mit dem Strontiumnitrat kristallisieren;

h) die isolierten Strontiumnitratkristalle in Stufe f) gewaschen werden, um anhaftende Mutterlauge zu entfernen und gereinigte Strontiumnitratkristalle und Waschwasser zu erhalten.

3. Verfahren nach Anspruch 1 oder 2, dadurch gekennzeichnet, daß das Alkalicarbonat in a) Natriumcarbonat ist.

4. Verfahren nach Anspruch 1 oder 2, dadurch gekennzeichnet, daß das Alkalicarbonat in a) Natriumsesquicarbonat ist.

5. Verfahren nach Anspruch 1 oder 2, dadurch gekennzeichnet, daß das alkalische Metallhydroxid in c) Calciumhydroxid ist.

6. Verfahren nach Anspruch 1 oder 2, dadurch gekennzeichnet, daß das Reinigungsmittel etwa 16 Gewichtsprozent der gereinigten Nitratlösung von d) beträgt.

7. Verfahren nach Anspruch 1 oder 2, dadurch gekennzeichnet, daß die Verdampfungskristallisationsstufe e) kontinuierlich durchgeführt wird.

8. Verfahren nach einem der Ansprüche 1 oder 2, dadurch gekennzeichnet, daß ein Fällungsmittel zu dem Reinigungsstrom zugegeben wird, um unlösliche Erdalkaliverbindungen zu bilden, diese unlöslichen Erdalkaliverbindungen zu trennen und einen feststofffreien Reinigungsstrom einer Abfallverwendung zuzuführen.

9. Verfahren nach Anspruch 8, dadurch gekennzeichnet, daß das Fällungsmittel Schwefelsäure ist, die unlösliche Erdalkalisulfate und eine Salpetersäurelösung bildet.

10. Verfahren nach Anspruch 8, dadurch gekennzeichnet, daß das Fällungsmittel Natriumcarbonat ist, das unlöliches Erdalkalicarbonat und eine Natriumnitratlösung bildet.

**Revendications**

1. Procédé de production de nitrate de strontium purifié se prêtant à des applications pyrotechniques à partir de sulfate de strontium (célestine), suivant lequel

(a) on convertit le sulfate de strontium en carbonate de strontium en chauffant une suspension du sulfate de strontium dans une solution d'un carbonate de métal alcalin de manière à former un précipité de carbonate de strontium impur et une solution d'un sulfate de métal alcalin; on lave le précipité à l'eau pour éliminer sensiblement le sulfate de métal alcalin et obtenir un précipité lavé de carbonate de strontium impur, caractérisé en ce que

(b) on forme une solution de nitrate de strontium en ajoutant de l'acide nitrique à une suspension aqueuse du précipité lavé obtenu au stade (a) de manière à convertir le carbonate en nitrate;

(c) on ajoute à la solution de nitrate de strontium obtenue au stade (b) un hydroxyde métallique

alcalin de manière à précipiter sous forme d'hydroxydes les métaux lourds et une quantité sensible à essentiellement totale du magnésium;

(d) on produit une solution clarifiée de nitrate de strontium en séparant tout insoluble de la solution obtenue au stade (c);

(e) on soumet la solution clarifiée de nitrate de strontium obtenue au stade (d) à la cristallisation avec évaporation pour former sélectivement des cristaux de nitrate de strontium;

(f) on sépare et on lave à l'eau les cristaux de nitrate de strontium obtenus au stade (e) pour obtenir des cristaux de nitrate de strontium isolés et une liqueur mère; et, éventuellement;

(g) on renvoie la liqueur mère obtenue au stade (f) au stade (e) de cristallisation avec évaporation, tandis qu'on prélève sur la liqueur mère un courant de purge suffisant pour empêcher les impuretés qu'elle contient d'atteindre une concentration à laquelle elles cocristallisent avec le nitrate de strontium;

(h) on lave les cristaux de nitrate de strontium isolés obtenus au stade (f) pour en éliminer la liqueur mère adhérente et obtenir des cristaux de nitrate de strontium purifié et une eau de lavage.

2. Procédé suivant la revendication 1, caractérisé en ce que:

(g) on renvoie la liqueur mère obtenue au stade (f) au stade (e) de cristallisation avec évaporation, tandis qu'on prélève sur la liqueur mère un courant de purge suffisant pour empêcher les impuretés qu'elle contient d'atteindre une concentration à laquelle elles cocristallisent avec le nitrate de strontium;

(h) on lave les cristaux de nitrate de strontium isolés obtenus au stade (f) pour en éliminer la liqueur mère adhérente et obtenir des cristaux de nitrate de strontium purifié et une eau de lavage.

3. Procédé suivant la revendication 1 ou 2, caractérisé en ce que le carbonate de métal alcalin au stade (a) est le carbonate de sodium.

4. Procédé suivant la revendication 1 ou 2, caractérisé en ce que le carbonate de métal alcalin au stade (a) est le sesquicarbonate de sodium.

5. Procédé suivant la revendication 1 ou 2, caractérisé en ce que l'hydroxyde métallique alcalin au stade (c) est l'hydroxyde de calcium.

6. Procédé suivant la revendication 1 ou 2, caractérisé en ce que le courant de purge est d'environ 16% du poids de la solution clarifiée de nitrate de strontium obtenue au stade (d).

7. Procédé suivant la revendication 1 ou 2, caractérisé en ce qu'on exécute de manière continue le stade (e) de cristallisation avec évaporation.

8. Procédé suivant la revendication 1 ou 2 caractérisé en ce qu'on ajoute un agent précipitant au courant de purge pour former des composés alcalino-terreux insolubles, on sépare ces composés alcalino-terreux insolubles et on transfère un courant de purge exempt de solides à un système d'évacuation d'eaux usées.

9. Procédé suivant la revendication 8, caractérisé en ce que l'agent précipitant est l'acide sulfurique qui forme des sulfates alcalino-terreux insolubles et une solution d'acide nitrique.

10. Procédé suivant la revendication 8, caractérisé en ce que l'agent précipitant est le carbonate de sodium qui forme des carbonates alcalino-terreux insolubles et une solution de nitrate de sodium.